# EUROPEAN PATENT APPLICATION

(11) **EP 3 188 089 A1**
(43) Date of publication of application: **05.07.2017**
(21) Application number: 16197850.7
(22) Date of filing: 08.11.2016
(51) Int. Cl.: G06Q 10/00, G06Q 10/08

(54) **INVENTORY MANAGEMENT FOR A QUANTIFIED AREA**

(30) Priority: 30.12.2015 US 201514985358
(71) Applicant: FUJITSU LIMITED, Kawasaki-shi Kanagawa 211-8588 (JP)
(72) Inventor: JETCHEVA, Jorjeta G., Sunnyvale, CA California 94085 (US)
(74) Representative: Lewin, David Nicholas

(57) **Abstract**

A method includes receiving a profile that includes a set of tasks. The method further includes navigating, by a reader device, a quantified area according to the profile to locate one or more items in the quantified area. The method also includes locating a first item in the quantified area. The method includes creating a location report that identifies the first item in the quantified area. The location report is to be used to generate an inventory of items in the quantified area. The method further includes sending the location report to one of a server or a mobile client device.

## Description

### FIELD

The embodiments discussed herein are related to inventory management for a quantified area.

### BACKGROUND

Inventory management systems may include manual entry of information describing items to be included in the inventory management system. The process of manually entering this information may be tedious and may consume a large amount of time. Conventional inventory management systems also may not include many additional features that users may find helpful and interesting. As a result, existing applications of inventory management systems would not work well if applied to some users.

### SUMMARY

According to an aspect of an embodiment, a method for inventory management includes receiving a profile that includes a set of tasks. The method further includes navigating, by a reader device, a quantified area according to the profile to locate one or more items in the quantified area. The method also includes locating a first item in the quantified area. The method also includes creating a location report that identifies the first item in the quantified area. The location report may be used to generate an inventory of items in the quantified area. The method further includes sending the location report to one of a server or a mobile client device.

The object and advantages of the embodiments will be realized and achieved at least by the elements, features, and combinations particularly pointed out in the claims.

It is to be understood that both the foregoing general description and the following detailed description are exemplary and explanatory and are not restrictive of the invention, as claimed.

### BRIEF DESCRIPTION OF THE DRAWINGS

Example embodiments will be described and explained with additional specificity and detail through the use of the accompanying drawings in which:
Figure 1 is a block diagram of an example operating environment for inventory management for a quantified area;
Figure 2 is a block diagram illustrating an example mobile client device;
Figure 3 shows a flow diagram of an example method to register an item with the inventory management system;
Figure 4 shows a flow diagram of an example method to track an item in the quantified area;
Figure 5 shows a flow diagram of an example method to update the status of an item with the inventory management system;
Figure 6 shows a flow diagram of an example method to create a profile for execution by a reader device within an inventory management system;
Figure 7 shows a flow diagram of an example method to execute a profile by a reader device within an inventory management system; and
Figure 8 illustrates a diagrammatic representation of a machine in an example form of a computing device within which a set of instructions, for causing the machine to perform any one or more of the methods discussed herein, may be executed, all in accordance with one or more embodiments.

### DESCRIPTION OF EMBODIMENTS

The embodiments discussed herein are related to inventory management for a quantified area. The inventory management may be provided by an inventory management system. The inventory management system may include a quantified area, a mobile client device including a mobile application and an inventory analytics server. These elements of the inventory management system will be described below.

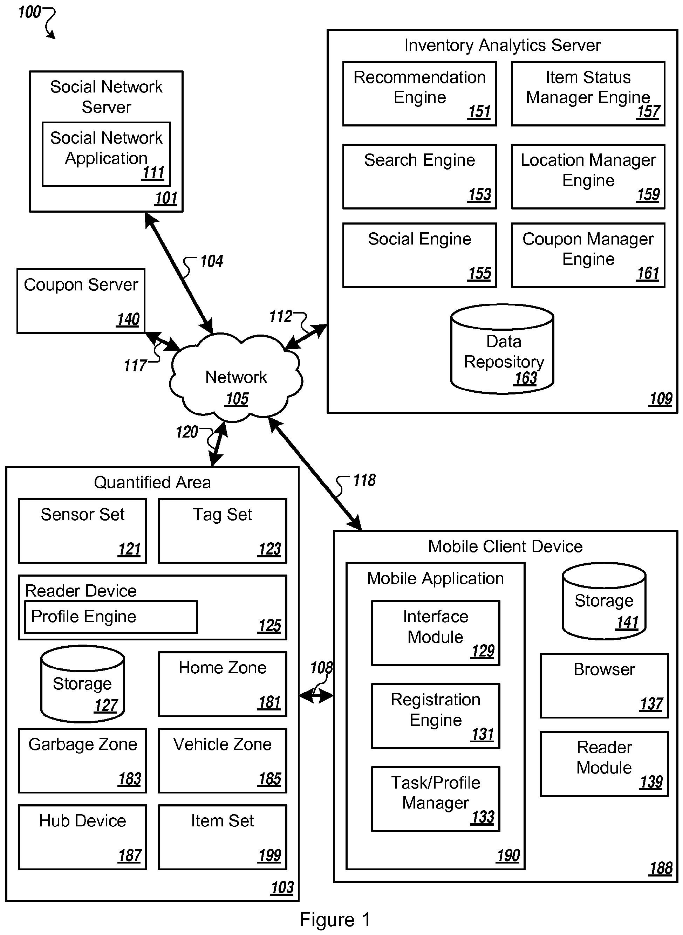

The quantified area may include any building, compound, set of buildings and any outdoor area surrounding one or more buildings. For ease in explanation, a residence (e.g., home and/or yard) of a user may be described herein as an example embodiment of a quantified area. The quantified area may include one or more items that are monitored by the inventory management system. The quantified area according to at least one embodiment will be described in more detail below with reference to Figures 1-7.

The mobile client device may include any processor-based computing device. For example, the mobile client device may include one or more of a wearable computer (e.g., a smartwatch, smart glasses, fitness tracker, etc.), a set top box, a tablet computing device, a laptop and a personal computer. The mobile client device may include a special-purpose computing device such as a smartphone executing the mobile application. The mobile client device may store the mobile application on a non-transitory computer-readable storage medium. The mobile client device may include a processor for executing the mobile application. The mobile application may provide a user interface for the inventory management system. The mobile application may receive data describing one or more items included in the quantified area. The mobile application may include code and routines configured to provide some or all of the following functionality to the user: enable the user to register one or more items with the inventory management system; enable the user to provide queries to the inventory management system and receive responses to the queries; enable the user to receive recommendations, coupons and product expiration notices from the inventory management system; enable the user to connect one or more social networks to the inventory management system; enable the user to borrow, buy or sell items or services among the user's social network connections; create tasks and/or profiles to be executed by a task-oriented reader device 125. The mobile client device and the mobile application according to at least one embodiment will be described in more detail below with reference to Figures 1-8.

The inventory analytics server may include a server including a processor, a memory and one or more software engines for storing data received from the mobile client device and providing one or more services to the mobile client device. The inventory analytics server according to at least one embodiment will be described in more detail below.

The quantified area, the mobile client device and the inventory analytics server may be communicatively coupled to one another via a network. Communications among these entities may be secured to protect the privacy and integrity of user data. For example, the communications may be encrypted or routed through a virtual private network or some other technology configured to maintain privacy of the user data. Other methods for protecting the privacy of the user data is described below with reference to Figure 1, including, for example, one or more of the following security features: cryptography; hashing; partial encryption; end-to-end encryption; digital signature or message authentication code (MAC), communication via a virtual private network (VPN) and/or Transport Layer Security (TLS) included in the network 105; and any technology that is a derivative or a fork of the previously described security features.

The inventory management system may monitor one or more items included in the quantified area. The one or more items may include any tangible object associated with the quantified area which is affixed with an identification tag (herein "a tag" or "the tag") and registered with the inventory management system. For example, the user may manually affix or couple a tag to an item. The tag may include a radio-frequency identification tag (an "RFID" tag), a near field communication tag (an "NFC" tag), or similar identification technology, such as Bluetooth LE or WiFi. For the purpose of clarity, both the RFID tag and the NFC tag will be referred to herein as "a tag" or "the tag." The item may have a bar code or a quick response code (herein "QR code"). The mobile client device may include a camera and software for reading bar codes or QR codes. In at least one embodiment, the QR code may be printed on top of the tag. The QR code may match a tag ID. As such, the mobile device may scan the tag or read the QR code to identify an item. This may allow a mobile client device that does not have an embedded RFID reader but which has a camera, to register the RFID tag (e.g., read its ID) because the ID of the tag matches the QR code printed on top of it. In at least one other embodiment, the QR code may be used in lieu of a tag and serves to identify the item itself.

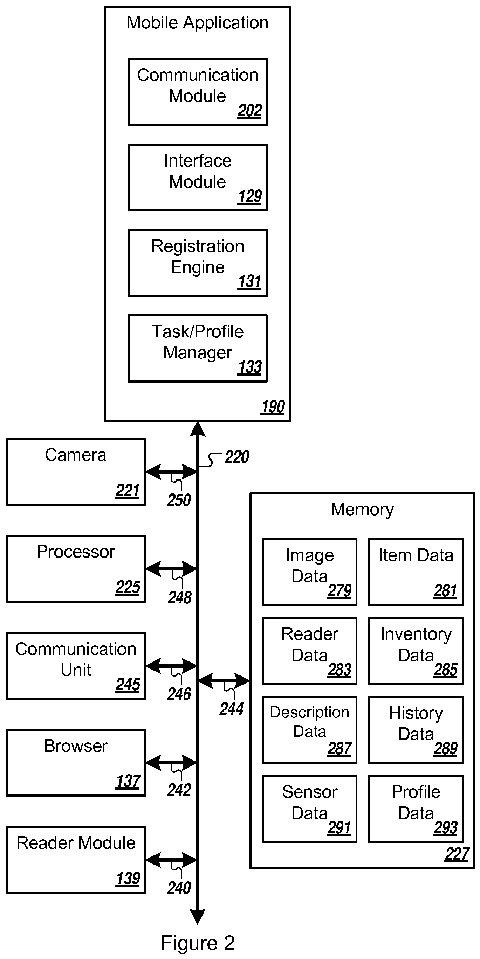

The user may register one or more items with the inventory management system. For example, the user may affix a tag to an item. The user may then register the tagged item with the inventory management system. The mobile client device may determine the identity of the tagged item and other descriptive information for the tagged item based on the bar code or the QR code. For example, the mobile client device may perform one or more of the following operations: take a picture of the tagged item; determine the presence of a bar code or QR code in the picture; read the bar code or QR code included in the picture; and determine the identity of the tagged item and information describing the tagged item based on data included in the bar code or the QR code. For example, the mobile client device may determine that the tagged item is an eight ounce can of tomato soup. The mobile application included on the mobile client device may generate inventory data describing the tagged item. For example, the inventory data may describe the item as one eight ounce can of tomato soup based on information included in the bar code or the QR code. The inventory data may include other information about the item such as the date when the item was purchased, an expiration date for the item, etc. Such information may be entered either manually or automatically by using an OCR technology or other suitable technology. The network may transmit the data to the inventory analytics server. In this way, the user may register items with the inventory management system. Optionally, one or more items may be registered at a point of sale of the one or more items. For example, a point of sale device may include functionality to scan the bar code of the item and register the item with the inventory management system. The inventory data according to at least one embodiment will be described in more detail below with reference to Figures 1 and 2. In at least one embodiment, a tag may be attached to an item by a consumer at any time, such as at the point of sale or at home. In at least one other embodiment, a tag may be attached to an item by a service bagging the items (e.g., a grocery store employee, an internet-based retailer, such as Google Express, BestBuy, Amazon, etc.), or by the manufacturer. The registration of the tagged items may also happen at the point of sale in which case the customer may receive the registration information of the item electronically (e.g., via email, text message, directly from a cash register) and may import the item into an inventory management application on the mobile client device.

The quantified area may include one or more zones, each of which may include a predetermined area. Thus, the one or more zones may include rooms in a building and one or more outdoor zones that may be near the building. In at least one embodiment, the one or more zones may include a residence or portions of the residence that serve one or more purposes. For example, the quantified area may include one or more of the following: a garbage zone; a vehicle zone; and a home zone. The garbage zone may include a portion of the quantified area where garbage is aggregated for disposal, recycling or composting. The vehicle zone may include a predetermined area, such as a portion of the quantified area where the user stores the user's vehicle. For example, the vehicle zone may include a garage, drive way, parking strip or other parking zone for a vehicle. In at least one embodiment, a zone may be entirely inside another zone. For example a truck zone may be defined by a truck (e.g., inside the truck is the zone) and the truck may be entirely within the vehicle zone. The home zone may include any portion of the quantified area that is not the garbage zone or the vehicle zone. The quantified area may include one or more different home zones. For example, a bedroom may include one home zone, a bathroom may include a different home zone and a television room may include yet another home zone. In at least one embodiment, a zone may include a closet, drawer or cabinet. The different zones of the quantified area may be referred to individually or collectively as "a zone" or "the zones."

The one or more zones included in the quantified area may include one or more reader devices. For example, the quantified area may include one or more zones and individual zones may include different reader devices. The reader device may include a device configured to detect and monitor the presence of tags. The reader device may include hardware to wirelessly communicate with the mobile client device. For example, the reader device may include a wireless antenna for wirelessly transmitting data to the mobile client device. The reader device may provide information to the mobile client device describing the presence of a tag and may also provide information to the client device with respect to the location of the tag in a zones of the quantified area.

In some embodiments, a reader device may be affixed or coupled to a surface of the different zones. For example, a reader device is affixed to an entrance of a room in the quantified area (e.g., any ingress or egress point of a zone such as a wall, floor, ceiling, light switch, etc.) so that the reader device may detect and monitor tags that enter or exit the room. In this way, individual reader devices may be stationary. In some embodiments, the reader device may be included in a dynamic object that moves about the quantified area. For example, a user's mobile client device (e.g., smartphone) may be configured to function as a reader device. In another example, the quantified area may include a robotic device (e.g., a mobile automation unit) such as a robotic vacuum cleaner or sweeper. The robotic device may also include a drone or a "robo bat" (e.g., a robotic device with capability to crawl on a ceiling). The robotic device may be battery operated. The robotic device may include a reader device. For example, the robotic device may include a robotic vacuum that travels to different zones of the quantified area to clean the zones and detect tags present in the zones. The robotic device may determine its own location using an onboard global positioning system, wireless signal triangulation or any other methodology configured to determine the location of the robotic device. In at least one embodiment, the reader device may include a handheld reader device, such as a stand-alone reader device or incorporated within another device (e.g., within the mobile client device). A user may walk around an area or zone with the handheld reader device. In at least one embodiment, the handheld reader device may output a notification (e.g., a beep, a message), for example, when the item the user is looking for is in range of the handheld reader device. In at least one embodiment, the notification may change depending on proximity of the handheld reader device. For example, an audible beep may change in frequency or a duration between beeps may shorten as the handheld reader device gets closer to the item.

In at least one embodiment, the robotic device may map out a zone and/or area and then allow the user to name the different zones/areas that the robotic device has discovered (e.g., living room, kitchen, etc.). The robotic device may also receive a labeled floor plan and then may explore the area to create its own internal map that matches that floor plan.

In at least one embodiment, the reader device may be configured so that the user touches the tag of an item to the reader device so that the reader device may store data indicating that the item has entered or exited the zone. For example, the tag may include an NFC tag and the reader device may include an NFC reader.

The one or more zones of the quantified area may include one or more sensors. The one or more sensors may include devices configured to determine one or more physical attributes of the area or zone where the one or more sensors are located. For example, a zone may include a sensor to measure the temperature, humidity, luminance, presence of smoke or carbon monoxide or any other physical attribute of the zone. The one or more sensors may also include a motion detector sensor or some other sensor configured to detect and track motion around where the sensor is located. Individual zones of the quantified area may include different sensors. The sensor may include hardware to wirelessly communicate with the mobile client device. For example, the sensor may include a wireless antenna for wirelessly transmitting data to the mobile client device. The sensor may wireless transmit sensor data describing the one or more physical attributes of the zone where the sensor is located.

The inventory management system may track one or more tagged items as the one or more tagged items move within the different zones of the quantified area. For example, a tagged item may enter a bathroom. The bathroom may include a reader device that detects the presence of the tagged item. The reader device included in the bathroom may monitor the presence of the tagged item in the bathroom. The reader device included in the bathroom may transmit history data to the mobile client device indicating that the tagged item has entered the bathroom. The history data for a tagged item may describe the location history for the tagged item within the quantified area. The tagged item may leave the bathroom and enter the bedroom. The reader device included in the bathroom may detect that tagged item has left the bathroom. The bedroom may include a different reader device. The reader device included in the bedroom may transmit history data to the mobile client device indicating that the tagged item has entered the bedroom. In this way, the inventory management system may store history data describing the movement of the one or more items within the quantified area. If a user wants to locate a tagged item, the user may query the mobile application and the mobile application may provide them with information describing the location of the tagged item.

The physical attributes of the different zones of the quantified area may be described by sensor data which is recorded by the one or more sensors included in the different zones. A sensor may transmit sensor data to the mobile client device describing the physical attributes of the area or zone where the sensor is located and/or moved. For example, a sensor may detect that a tagged item is being or has been moved from a bathroom to a bedroom. A sensor included in the bathroom may transmit sensor data to the mobile client device describing a physical attribute of the bathroom while the tagged item was located in the bathroom. A different sensor included in the bedroom may transmit sensor data to the mobile client device describing a physical attribute of the bedroom while the tagged item is located in the bedroom. Some items may be affected by the physical attributes of the environments where the items are located. For example, assume that the tagged item is a medicine that is affected if it is exposed to temperatures exceeding a certain threshold. The user may determine what temperatures the medicine was exposed to by querying the mobile application and the mobile application may provide the user with information describing the temperatures that the medicine was exposed to while in the quantified area. The information may be displayed by a GUI which the mobile application may cause to be displayed by the mobile client device.

As described above, the inventory management system may include inventory data describing the items included in the quantified area. The inventory data may include a count for one or more categories of items. For example, assume that the category is "eight ounce can of tomato soup." The inventory data may describe how many eight ounce cans of tomato soup are included in the quantified area. When an item enters the garbage zone or the vehicle zone, for example, the inventory management system may update the inventory for the item to indicate that the item has left the quantified area or is expected leave in the future. For example, assume that the inventory data indicates that the quantified area includes three eight ounce cans of tomato soup. The user may eat one of the eight ounce cans of tomato soup and then place the empty can in the garbage zone of the quantified area. The inventory management system may detect the presence of the empty can in the garbage zone and update the inventory data to indicate that the quantified area now includes two eight ounce cans of tomato soup. The user may provide an input specifying that the quantified area maintain an inventory of at least three eight ounce cans of tomato soup. The inventory management system may provide a notification to the user that the user needs to buy an eight ounce can of tomato soup when the user visits a grocery store. The inventory management system may identify a coupon for purchasing the eight ounce can of tomato soup at the grocery store. The notification may include the coupon for purchasing the eight ounce can of tomato soup.

The inventory management system may provide one or more recommendations to the user. For example, the inventory management system may, for example: identify that an item is missing from the quantified area and notify the user about the status of the item; identify that an item is close to an expiration date and notify the user about the status of the item; identify that a number of items is below or near a minimum threshold amount of items; suggest that an item be purchased at a retail store or an online store; enable automatic or manual online purchases of one or more items; identify one or more coupons for items that the user may purchase; identify alternative items which the user may purchase and notify the user about the alternative item (the alternative item may include cheaper or have less environmental impact versus the item which the user has purchased in the past); identify if an item has been exposed to physical attributes that affect the item and notify the user about the status of the item (and, if needed, update the inventory to indicate a new expiration date for the item); identify if an item is leaving a zone where it is supposed to be constrained and notify the user about the status of the item (or trigger a security system included in the quantified area about a possible burglary); and identify if an item is entering a zone where it is not supposed to be located (e.g., the item is a gun that enters a child's bedroom) and notify the user about the status of the item.

The inventory management system may include social network functionality. For example, one or more users of the inventory management system may live within a predefined distance of one another. The user may modify the privacy settings of the inventory management system so that other users with whom the user shares a connection on a social network may view some or all of the items in the user's quantified area. Users may use this functionality to borrow items from one another. Users may also use this functionality to sell items to one another either in person or online. Users may also use this functionality to send each other money. Users may also advertise their availability to assist other users. For example, a user may advertise that the user is available to assist other users in moving furniture. Users may contact one another via an interface of the mobile application so that the users may borrow items, sell items or provide services to one another. For example, the inventory management system may enable a financial transaction related to a sale of an inventoried item or a service associated with the inventoried item. If a user is unable to borrow or buy an item from other users, the inventory management system may identify a coupon for purchasing the item from a vendor and provide the coupon to the user. In at least one embodiment, the inventory management system may continuously attempt to identify item and/or "need" matches between users of the inventory management system. The inventory management system may not explicitly advertise an item or a service. For example, a user may mark an item as "sharable," and may create a profile with services that the user is willing to provide. The inventory management system may continuously check for matches to the user profile and may inform the user if something relevant is found.

The inventory management system may include task or profile-based operations. The reader device may receive a task or profile from an external source (e.g., the mobile client device, the inventory analytics server, the social network server). The reader device may execute the tasks and/or profiles within the inventory management system. When the reader device is part of a robotic device (e.g., a mobile sensing platform that may perform RFID reading, video surveillance, and other sensing), the robotic device may receive the tasks and/or profiles and then may executes the tasks and/or profiles using some combination of its sensors (e.g., the reader device). As used herein, a "profile" may refer to a collection of one or more tasks in a group. Tasks in profiles may have an absolute order of execution. Alternatively, a reader device that is executing the profile may be allowed to reorder the tasks to create the most efficient trajectory possible or at least a trajectory that is more efficient than possible in the absolute order of execution. For ease in explanation, a profile will be used herein with the understanding that a profile may refer to one or more tasks. Some profiles may be schedule-based. For example, the reader device may execute some profiles on a schedule (e.g., every morning at 8 am). In at least one embodiment, the reader device may notify the user, such as via the mobile client device, that the profile was performed at 8 am. Other profiles may be situation-based (e.g., when guests are coming to visit, a party with kids' friends). In at least one embodiment, different profiles may be performed at different zones within the quantified area 103.

Now turning to the Figures, Figure 1 is a block diagram of an example operating environment 100 for inventory management for a quantified area. The operating environment 100 may include a social network server 101, an inventory analytics server 109, a mobile client device 188, a quantified area 103 and a coupon server 140.

In at least one embodiment, these entities of the operating environment 100 may be communicatively coupled via a network 105. For example, the social network server 101 may be communicatively coupled to the network 105 via a signal line 104. The inventory analytics server 109 may be communicatively coupled to the network 105 via a signal line 112. The mobile client device 188 may be communicatively coupled to the network 105 via a signal line 118. The quantified area 103 may be communicatively coupled to the network 105 via a signal line 120. The coupon server 140 may be communicatively coupled to the network 105 via a signal line 117. Some elements of the operating environment 100 may be coupled to one another without use of the network 105. For example, the quantified area 103 may be communicatively coupled to the mobile client device 188 via a signal line 108.

In at least one embodiment, one or more communications among the entities of the operating environment 100 may be configured to ensure the confidentiality and integrity of the information and data included in these communications. For example, communications via signal lines 104, 112, 118, 108, 120, 117, 104 and 108 may include one or more of the following security features: cryptography; hashing; partial encryption; end-to-end encryption; digital signature or MAC, communication via a VPN and/or TLS included in the network 105; and any technology that is a derivative or a fork of the previously described security features.

While Figure 1 illustrates one social network server 101, one inventory analytics server 109, one mobile client device 188, one quantified area 103 and one coupon server 140, the disclosure applies to a system architecture including one or more social network servers 101, one or more update servers 109, one or more mobile client devices 188, one or more quantified areas 103 and one or more coupon servers 140. Further, although Figure 1 illustrates one network 105 coupled to the entities of the operating environment 100, in practice one or more networks 105 of various types may be connected to these entities.

The network 105 may include a wired or wireless network and may have numerous different configurations including a star configuration, a token ring configuration, or other configurations. Furthermore, the network 105 may include a local area network (LAN), a wide area network (WAN) (e.g., the Internet), or other interconnected data paths across which multiple devices may communicate. In at least one embodiment, the network 105 may include a peer-to-peer network. The network 105 may also be coupled to or include portions of a telecommunications network for sending data in a variety of different communication protocols. In at least one embodiment, the network 105 includes Bluetooth® communication networks or a cellular communications networks for sending and receiving data including via short messaging service (SMS), multimedia messaging service (MMS), hypertext transfer protocol (HTTP), HTTPS, direct data connection, WAP, e-mail, etc. In at least one embodiment, the network 105 may include a GPS satellite for providing GPS coordinates to the mobile client device 188 or the mobile client device 188. The network 105 may include a mobile data network such as 3G, 4G, long term evolution (LTE), Voice-over-LTE ("VoLTE"), or any other mobile data network or combination of mobile data networks. In at least one embodiment, the network 105 may include a combination of different networks.

The mobile client device 188 may include a mobile computing device that includes a memory and a processor. For example, the mobile client device 188 may include a laptop computer, a desktop computer, a tablet computer, a mobile telephone, a personal digital assistant ("PDA"), a mobile e-mail device, a portable game player, a portable music player, a set top box, a connected device or wearable computer (e.g., a smartwatch, smart glasses, fitness tracker, etc.), a television with one or more processors embedded therein or coupled thereto, or other electronic device capable of accessing the network 105. A user may interact with the mobile client device 188. The mobile client device 188 may send and receive data to and from other entities of the operating environment 100 via the network 105. The mobile client device 188 may be communicatively coupled to the quantified area 103 via a signal line 108. The signal line 108 may include a hard wired or wireless communicative coupling between the mobile client device 188 and the quantified area 103 or an element of the quantified area 103. In at least one embodiment, the quantified area 103 or elements of the quantified area 103 may access the network 105 at least in part via the mobile client device 188. In at least one embodiment, the mobile client device 188 may include an element of the quantified area 103.

The mobile client device 188 may include a mobile application 190, a browser 137, a reader module 139 and a storage 141. The mobile client device 188 may include one or more other elements described below with reference to Figure 2. For example, the mobile client device 188 may include a processor, a memory, a camera and a communication unit.

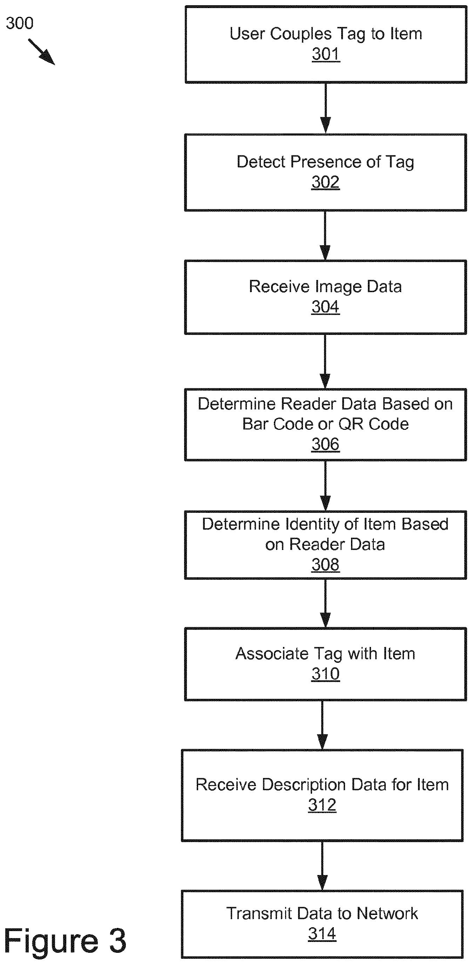

The mobile application 190 may include code and routines configured to perform or control performance of one or more steps of the methods 300, 400, 500, 600. 700 described below with reference to Figures 3, 4, 5, 6 and 7 when executed by the processor of the mobile client device 188.

In at least one embodiment, the mobile application 190 may cause a display of the mobile client device 188 to display a graphical user interface ("GUI") including functionality to enable the user to register one or more items with the inventory management system. The GUI may include one or more graphical display elements, user-selectable graphical elements or user input fields. The GUI may be configured to provide the user with one or more of the following services: enable the user to provide queries to the inventory management system; enable the user to receive responses to the queries provided to the inventory management system; enable the user to receive recommendations, coupons and/or product expiration notices from the inventory analytics server 109; enable the user to connect one or more social networks to the inventory analytics server 109; enable the user to borrow or sell items to social network connections; enable the user to share services with one or more of the user's social network connections; enable the user to receive services or offers from one or more of the user's social network connections; enable the user to create, modify, share, sell, send and/or buy tasks and profiles related to inventory management. In at least one embodiment, the inventory analytics server 109 may be an element of the mobile application 190.

The mobile application 190 may include one or more of an interface module 129 a registration engine 131 and a task/profile manager 133. The interface module 129 may include code or routines configured to cause the processor of the mobile client device 188 to generate and display the GUI of the mobile application 190 when executed by the processor. The registration engine 131 may include code and routines configured to cause the processor of the mobile client device 188 to perform one or more steps of method 300 described below with reference to Figure 3. For example, the registration engine 131 may include functionality to enable the user to register one or more items with the inventory management system via the mobile application 190. In at least one embodiment, one or more aspects of the registration engine 131 may be an element of a point of sale device. In this and other embodiments, the one or more items may be registered with the inventory management system at the point of sale.

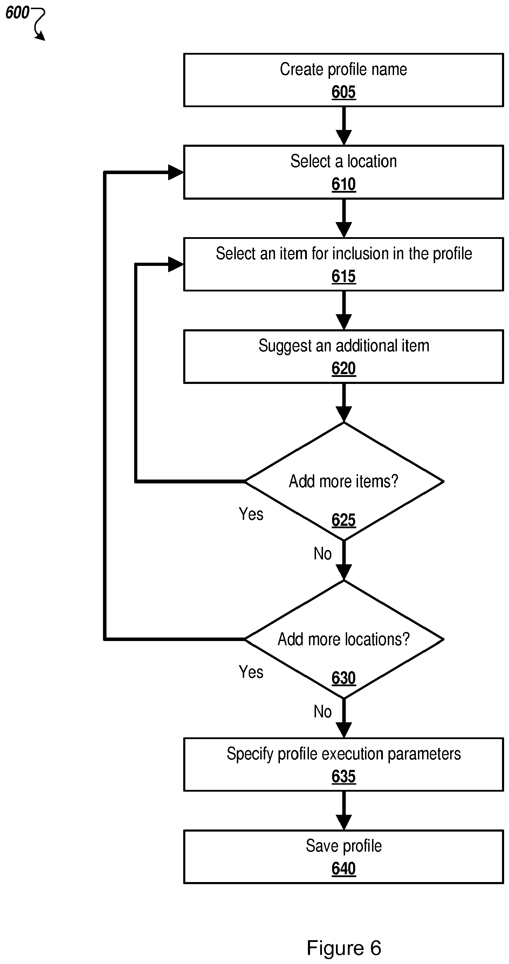

The task/profile manager 133 may include code and routines configured to cause the processor of the mobile client device 188 to perform one or more steps of method 600 described below with reference to Figure 6. For example, the task/profile manager 133 may include functionality to enable the user to create, via the mobile application 190, one or more tasks and/or profiles to be executed by the reader device 125 within the inventory management system.

In at least one embodiment, one or more of the interface module 129, the registration engine 131 and the task/profile manager 133 may include elements that are independent of the mobile application 190. For example, one or more of the interface module 129, the registration engine 131 and the task/profile manager 133 may be stored on the storage 141 and executed by a processor of the mobile client device 188. In another example, one or more of the interface module 129, the registration engine 131 and the task/profile manager 133 may be stored on a server such as the inventory analytics server 109 and executed by a processor of the inventory analytics server 109.

In at least one embodiment, one or more elements of the inventory analytics server 109 may be stored and executed by the mobile client device 188. For example, one or more of the recommendation engine 151, the search engine 153, the social engine 155, the item status manager engine 157, the location manager engine 159, the coupon manager engine 161 and the data repository 163 may be elements of the mobile application 190 or the storage 141. These elements of the inventory analytics server 109 will be described in more detail below.

In at least one embodiment, one or more of the mobile application 190, the interface module 129, the registration engine 131, and the task/profile manager 133 may be implemented using hardware including a field-programmable gate array ("FPGA") or an application-specific integrated circuit ("ASIC"). In some other embodiments, the mobile application 190, the interface module 129, the registration engine 131, and the task/profile manager 133 may be implemented using a combination of hardware and software. The mobile application 190, the interface module 129, the registration engine 131, and the task/profile manager 133 may be stored in a combination of the devices and servers, or in one of the devices or servers of the operating environment 100. The mobile application 190, the interface module 129, the registration engine 131, and the task/profile manager 133 are described in more detail below with reference to Figures 2-5.

The storage 141 may include a non-transitory storage medium that stores data for providing the functionality described herein. The storage 141 may include a dynamic random access memory (DRAM) device, a static random access memory (SRAM) device, flash memory, or some other memory devices. In at least one embodiment, the storage 141 also includes a non-volatile memory or similar permanent storage device and media including a hard disk drive, a floppy disk drive, a CD-ROM device, a DVD-ROM device, a DVD-RAM device, a DVD-RW device, a flash memory device, or some other mass storage device for storing information on a more permanent basis.

The browser 137 may include code and routines for enabling the mobile client device 188 to access webpages and other content via the network 105 when executed by the processor of the mobile client device 188. For example, the browser 137 may include a web browser.

The reader module 139 may include code and routines for enabling the mobile client device 188 to detect and read or more of the following: an RFID tag; an NFC tag; a QR code; and a bar code. The reader module 139 may work in combination with a camera of the mobile client device 188 when detecting and reading QR codes and bar codes. The mobile client device 188 and the camera are described in more detail below with reference to Figure 2. The functionality of the reader module 139 is described in more detail below with reference to method 300 of Figure 3.

In at least one embodiment, the mobile client device 188 may include a smartphone that may access the network 105. The network 105 may include a mobile data network as described above. The mobile client device 188 may access the network 105 to enable the user to register one or more items with the inventory management system.

In at least one embodiment, the mobile client device 188 may access the network 105 to enable the user to access one or more of the services provided by the inventory analytics server 109. For example, the mobile client device 188 may access the network 105 to enable the user to access a service provided by one or more of the recommendation engine 151, the search engine 153, the social engine 155, the item status manager engine 157, the location manager engine 159, and the coupon manager engine 161. In at least one embodiment, the user may access one or more of these services via a GUI of the mobile application 190 which is displayed by the mobile client device 188, e.g., by the interface module 129. Alternatively or additionally, the user may access one or more of these services via a web interface of the browser 137 which may be displayed by the mobile client device 188. For example, the mobile client device 188 may include a personal computer including the browser 137 and the user may access one or more of these services via the browser 137. In this way, the user may access the inventory management system via the mobile application 190 or the browser 137. Accordingly, it is to be understood that any GUI described herein with reference to the mobile application 190 may also be displayed and accessible by the user via the browser 137.

The quantified area 103 may include any building, compound, set of buildings and any outdoor area surrounding one or more buildings. For example, the quantified area 103 may include a house, an apartment, a condo, or any other personal residence of a user. Alternatively or additionally, the quantified area 103 may include a business office, a workshop, a store, or other non-residence owned by, used by, or otherwise associated with the user. The quantified area 103 may send and receive data to and from other entities of the operating environment 100 via the network 105. The quantified area 103 may be communicatively coupled to the network 105 via a signal line 120.

The quantified area 103 may include one or more zones. The one or more zones may include rooms in the quantified area 103 or portions of the quantified area 103 that serve one or more purposes. For example, the quantified area 103 may include one or more of the following zones: a garbage zone 183; a vehicle zone 185; and a home zone 181. The garbage zone 183 may include a portion of the quantified area 103 where garbage is aggregated for disposal, recycling or composting. The vehicle zone 185 may include portion of the quantified area 103 where the user stores the user's vehicle. For example, the vehicle zone 185 may include a garage, drive way, parking strip or other parking area for a vehicle. The home zone 181 may include any portion of the quantified area 103 that is not the garbage zone 183 or the vehicle zone 185. The quantified area 103 may include one or more different home zones 181. For example, the quantified area 103 may include a bedroom, a bathroom, a television room and any other zone or part of an area that is not the garbage zone 183 or the vehicle zone 185. The bedroom may include one home zone 181, the bathroom may include a different home zone 181 and the television room may include yet another home zone 181. Accordingly, the quantified area 103 may include two or more home zones 181.

The quantified area 103 may include one or more of the following elements: an item set 199; a tag set 123; a reader device 125; a sensor set 121; a hub device 187; and a storage 127. The item set 199 may include one or more items. The tag set 123 may include one or more tags. The one or more items may include any tangible object associated with the quantified area 103 which is affixed with a tag from the tag set 123 and registered with the inventory management system. For example, the user may manually affix or couple a tag from the tag set 123 to an item from the item set 199. Optionally, the item may be manufactured with the tag already present in the item. The tag may include an RFID tag or an NFC tag. For the purpose of clarity, both the RFID tag and the NFC tag will be referred to herein as "a tag" or "the tag." One or more items from the item set 199 may include a bar code or a QR code. The item set 199, tag set 123 and reader device 125 will be described in more detail below with reference to methods 300, 400, 500, 600, 700 of Figures 3, 4, 5, 6 and 7.

The sensor set 121 may include one or more sensors. The home zone 181, garbage zone 183 and vehicle zone 185 may each include its own sensor set 121. Individual zones of the quantified area 103 may include different sensor sets 121, and the individual sensor sets 121 may include different sensors than other sensor sets 121 included in the quantified area 103.

The one or more sensors included in the sensor set 121 may include devices configured to determine one or more physical attributes of the area or zone where the one or more sensors are located. For example, an area or zone may include a sensor to measure the temperature, humidity or any other physical attribute of the area or zone where the sensor is located. The one or more sensors may also include a motion detector sensor or some other sensor configured to detect and track motion in the area or zone where the sensor is located.

The reader device 125 may include a hardware device having a camera and software for detecting and reading tags, bar codes and QR codes. The reader device 125 may have additional sensors to detect ambient conditions, such as sensors to measure temperature, sound, liquid, gas, humidity, pressure, light, infrared, etc. These additional sensors may collect data that may supplement the reading of the tags. For example, if the reader device 125 is unable to read a tag of a particular item, the reader device 125 may user a camera to perform a visual analysis of the zone to find the misplaced item. In at least one embodiment, the reader device 125 may take a picture of the presumed location of the item and send the picture to the user for confirmation that the item has been located. Some of these sensors may be attached to the reader device 125 while some may be deployed in the environment, such as a closed window sensor that may be attached to a window. Sensors that are deployed in the environment may communicate with the reader device 125, such as by a wireless communication. The reader device 125 may accept voice commands or commands from the mobile client device 188, and sign commands (e.g., sign language).

As described, the reader device 125 may include a robotic device may travel to different zones of the quantified area when executing one or more profiles. The reader device 125 may detect tags present in the various zones of the quantified area 103. The reader device 125 may receive a user-defined profile from the mobile client device 188, such as via the network 105 or the signal line 108. When executing a profile, the reader device 125 may check conditions besides a presence of tagged items, such as whether the lights in a zone are turned on/off, a temperature of the zone, noise levels in an area, whether there are open windows/doors when no one is expected to be in the zone, among others. In at least one embodiment, the reader device 125 may watch for unusual activity that might need to be reported, such as when a person has fallen on the ground and may not be able to get up, when a child is crying, a fire/flooding/carbon monoxide leak, there are unauthorized people in the zone (e.g., burglars), etc. The reader device 125 may detect the unusual activity based on image processing or other commands that may use a visual or sensing check (e.g., what is the temperature in an area, or air quality, etc.). Upon detection of possible burglars, for example, the reader device 125 may execute evasive maneuvers to try to avoid being taken by the burglars. The reader device 125 may interact with the mobile client device 188 by sending a message relating to activities of the reader device, such as upon detecting unusual activity. The message may include information about the activity and may include a request for user input and/or confirmation. For example, upon detecting an upcoming party, the reader device 125 may send a message (that may include an image) to the mobile client device 188. The message may ask a user if additional ketchup may be needed for the party. If the user responds with "YES," then the reader device 125 may send a confirmation message to the mobile client device 188. In at least one embodiment, the reader device 125 may also purchase ketchup for delivery to the user's home. Upon receiving the ketchup, the reader device 125 may add the ketchup to the inventory.

Example profiles that may be executed by the reader device 125 may include a profile for locating items (e.g., to find car keys within any room of a home), determining presence of an item (e.g., whether there is shampoo anywhere in a home), determining a number of items in the quantified area 103 (e.g., two candles), checking a particular zone for an item (e.g., whether there is soap in a guest bathroom); checking if an item of type X is at location L, making sure an item (or N items) of type X are in a zone or zones, making sure multiple items X, Y and Z are all in a particular zone or a location within the zone (e.g., to make sure that there are two candles, a bottle of wine, a box of chocolates in the living room, that car keys, a wallet, and an umbrella are by the door prior to having to go to work). In a restaurant, the reader device 125 may check that there is a salt shaker and a flower vase on each table prior to opening; or in a medical office, the reader device 125 may check that some basic equipment/supplies are in each room. Other example profiles may include making sure that one or more items are not in a zone (e.g., sensitive documents are not lying in the open), finding all items whose expiration date is within D days, making sure there is an unexpired item of type X in location L (e.g., making sure the ketchup on the table has not expired), etc. In at least one embodiment, once the reader device 125 finds an item(s), the reader device 125 may wait and beep, may send the location of the item for display on a map on the mobile client device 188, may find the user (e.g., based on the mobile client device 188 sending coordinates or Wi-Fi localization), after which the reader device 125 may escort the item to the location of the mobile client device 188. In at least one embodiment, the reader device 125 may travel around the area and may perform image processing to find the user, possibly starting with a last known location of the user.

Multiple reader devices 125 may be used to execute one or more profiles. In at least one embodiment, multiple reader devices 125 may be used to execute the same profile. Multiple reader devices 125 may share tasks within the profile to speed up an overall execution of the profile (e.g., each reader device 125 performs one or a subset of the tasks in the profile). The reader devices 125 may communicate with each other directly (or indirectly via one or more hops), such as via a mesh network. In at least one embodiment, different reader devices 125 may have different sensors, e.g., a first reader device 125 may have a camera, a second reader device 125 may have a temperature sensor, etc. In at least one embodiment, the reader device may communicate with each other without a formal network infrastructure but instead may forward traffic on each other's behalf.

The sensor set 121 may include hardware and software to wirelessly communicate with the mobile client device 188. For example, the sensor set 121 may include a wireless antenna for wirelessly transmitting data to the mobile client device 188 via the network 105. The sensor set 121 may wireless transmit sensor data to the mobile client device 188. The sensor data may include data describing the one or more physical attributes of the area or zone where the sensor set 121 is located. The sensor data is described in more detail below with reference to element 291 of Figure 2.

The hub device 187 may be an optional feature of the quantified area 103. The hub device 186 may include a router or some other device configured to enable the mobile client device 188 or the inventory analytics server 109 to communicate with the elements of the quantified area 103. In at least one embodiment, the hub device 187 may receive data from one or more elements of the quantified area 103 and transmit the data to the mobile client device 188 or the inventory analytics server 109. The hub device 187 may communicate with the mobile client device 188 or the inventory analytics server 109 via a wired or wireless communicative coupling. For example, signal line 108 may include a hardwired communicative coupling between the quantified area 103 and the mobile client device 188 and signal line 120 may include a wireless communicative coupling between the quantified area 103 and the network 105.

In at least one embodiment, the sensor set 121 and the one or more reader devices 125 transmit their data to the inventory analytics server 109 and not the mobile client device 188. For example, the hub device 187 may aggregate this data and transmit the data to the inventory analytics server 109 via the network 105. Optionally, the sensor set 121 and the one or more reader devices 125 may transmit this data to the inventory analytics server 109 via the network 105 without use of the hub device 187.

The storage 127 may include a non-transitory storage medium that stores data for providing the functionality described herein. The storage 141 may include a DRAM device, a SRAM device, flash memory, or some other memory devices. In at least one embodiment, the storage 141 also includes a non-volatile memory or similar permanent storage device and media including a hard disk drive, a floppy disk drive, a CD-ROM device, a DVD-ROM device, a DVD-RAM device, a DVD-RW device, a flash memory device, or some other mass storage device for storing information on a more permanent basis.

The social network server 101 may include a hardware server that includes a processor, a memory, and network communication capabilities. The social network server 101 sends and receives data to and from other entities of the operating environment 100 via the network 105. The social network server 101 may be communicatively coupled to the network 105 via a signal line 104.

The social network server 101 may include a social network application 111. The social network application 111 may include code and routines configured to provide a social network service. The social network service may include a social network. A social network may include a type of social structure where the users may be connected by a common feature. The common feature may include relationships/connections, e.g., friendship, family, work, an interest, geographic neighborhood, etc. The common features may be provided by one or more social networking systems including explicitly defined relationships and relationships implied by social connections with other online users, where the relationships form a social graph. In some examples, the social graph may reflect a mapping of these users and how these users may be related.

The social network server 101 and the social network application 111 may be representative of one social network, and there may be multiple social networks coupled to the network 105, respectively having their own servers, applications, and social graphs. For example, a first social network may be more directed to business networking, a second may be more directed to or centered on academics, a third may be more directed to local business, a fourth may be directed to dating, and others may be of general interest or a specific focus.

The coupon server 140 may include a hardware server that includes a processor, a memory, and network communication capabilities. The coupon server 140 may send and receive data to and from other entities of the operating environment 100 via the network 105. The coupon server 140 may be communicatively coupled to the network 105 via a signal line 117.

In at least one embodiment, the coupon server 140 may provide one or more coupons to the user. The coupons may include electronic coupons or tangible coupons. The coupons may be personalized for the user based on an analysis of the items registered with the inventory management system. For example, an analysis of the items registered with the inventory management system may indicate that the user needs to purchase a particular item. The coupon server 140 may provide the inventory analytics server 109 with an electronic coupon for the item that the user needs to purchase. The inventory analytics server 109 may provide the electronic coupon to the user via the mobile application 190. A tangible coupon and an electronic coupon may be referred to herein collectively or individually as "a coupon" or "the coupon."

In at least one embodiment, the inventory analytics server 109 may provide the electronic coupon to the user via e-mail, text message or any other form of communication. In at least one embodiment, the coupon server 140 may cause a tangible coupon to be mailed to the shipping address associated with the quantified area 103.

In at least one embodiment, the coupon server 140 may include functionality to provide the user of the mobile client device 188 with a targeted advertisement. For example, the coupon manager engine 161 may provide data to the coupon server 140 describing one or more products that the user may want to purchase. The coupon server 140 may provide a targeted advertisement to the mobile client device 188. For example, the coupon server 140 may cause the browser 137 to display an advertisement for the mobile client device 188 to display a targeted advertisement for the one or more products indicated by the coupon manager engine 161. The targeted advertisement may include a coupon for purchasing the product. The coupon manager engine 161 may identify the one or more products based on the items included in the item set 199 or the user's historical use of items included in the item set 199. In at least one embodiment, the targeted advertisement may also be provided to the user via e-mail, text message, a phone call, or any other form of communication.

The inventory analytics server 109 may include a hardware server that includes a processor, a memory, and network communication capabilities. The inventory analytics server 109 may send and receive data to and from other entities of the operating environment 100 via the network 105. The inventory analytics server 109 may be communicatively coupled to the network 105 via the signal line 112.

The inventory analytics server 109 may include one or more of the following elements: a recommendation engine 151; a search engine 153; a social engine 155; an item status manager engine 157; a location manager engine 159; a coupon manager engine 161; and a data repository 163.

The data repository 163 may include a non-transitory storage medium that stores data for providing the functionality described herein for the elements of the inventory analytics server 109. For example, the data repository 163 may store inventory data, history data and sensor data for the one or more items included in the item set 199. The inventory data, sensor data and history data are described in more detail below with reference to elements 285, 289 and 291 of Figure 2, respectively. In at least one embodiment, the data repository may store tasks and/or profiles that may be executed by the reader device 125. In at least one embodiment, users may create and upload tasks and/or profiles to the data repository 163. In at least one embodiment, other users may browse the data repository 163 for tasks and profiles and may download them. In at least one embodiment, the reader device 125 may receive a task or a profile from the data repository 163.

The data repository 163 may also store social network data received from the social network application 111. The data repository 163 may also store graphical data used to generate one or more GUIs.

The data repository 163 may include a DRAM device, a SRAM device, flash memory, or some other memory devices. In at least one embodiment, the data repository 163 also includes a non-volatile memory or similar permanent storage device and media including a hard disk drive, a floppy disk drive, a CD-ROM device, a DVD-ROM device, a DVD-RAM device, a DVD-RW device, a flash memory device, or some other mass storage device for storing information on a more permanent basis.

The recommendation engine 151 may include code and routines configured to provide a recommendation service. For example, the recommendation engine 151 may determine one or more recommendations for the user. The recommendation engine 151 may provide the user with the one or more recommendations via the mobile client device 188.

The recommendation engine 151 may determine the one or more recommendations for the user based on an analysis of the item set 199, the user's historical use of the items included in the item set 199 or some other relevant factor. For example, the recommendation engine 151 may determine that the user may be able to save money by purchasing a product that is equivalent to one of the items included in the item set 199. The product may include a generic product that is equivalent to one of the items included in the item set 199. The product may include a competing product that would be cheaper because of the available of an electronic coupon or some other factor. In another example, the recommendation engine 151 may identify and recommend a product that has less environmental impact versus one of the items included in the item set 199. In at least one embodiment, the recommendation engine 151 may use machine learning to determine when the user may need an item or how fast a user may historically consume an item. This determination may be based on history of purchasing/re-ordering the item, or may be combined with additional information. For example, if there is an upcoming party (e.g., as described in the user's calendar), then some items may be used faster than normal (e.g., ketchup, paper towels, cups). When trying to predict when a consumable may be used, the recommendation engine 151 may also take into account a rate of use of related items (e.g., milk and cookies may have related use, hot dogs and mustard, etc.). The recommendation engine 151 may also coordinate with the household members' calendars (e.g., if some of all are on vacation, the recommendation engine 151 may adapt the expected time at which an item is used). The weather may also impact the rate at which certain items are used. For example, if the weather is warm, water and/or juice may be consumed faster than normal. In at least one embodiment, the recommendation engine 151 may be configured to import data about items that are not tagged. For example, the recommendation engine 151 may import credit card transactions from which the recommendation engine 151 may learn how often certain items are used, and the recommendation engine 151 may make early recommendations for those items.

In at least one embodiment, the user may request information about the existence of products that may be cheaper or have less environmental impact using a GUI of the mobile application 190 and the recommendation engine 151 may identify these products and provide information describing these products to the user.

In at least one embodiment, the recommendation engine 151 may determine that the user is running low on inventory for a particular item and the recommendation engine 151 may provide the mobile client device 188 with a recommendation that the user purchase a replacement for the item. The recommendation engine 151 may analyze the user's historical use of the item to determine that the user is running low on inventory for the item. The user may also provide the recommendation engine 151 with input via the mobile application 190 or the browser 137 to indicate a threshold for when the user is running low on inventory for a particular item. The recommendation engine 151 may analyze the inventory for an item. For example, the recommendation engine 151 may analyze the inventory for an item when the item enters the garbage zone 183 or the vehicle zone 185 to determine whether the threshold for the item has been met. In this way, the recommendation engine 151 may ensure that the user maintains adequate inventory of items in the quantified area 103.

In at least one embodiment, the user may have configured the recommendation engine 151 to include payment information, shipping information and authorization to automatically purchase an item from an online store in the event that inventory is running low. For example, the recommendation engine 151 may determine that the user is running low on inventory for an item and then take steps to purchase a sufficient number of items from an online store to ensure that the user maintains adequate inventory of this item in the quantified area 103.

In at least one embodiment, the mobile application 190 may include functionality to enable the user to identify products that may generally be present in the quantified area 103. For example, the user may provide an input to indicate which items may generally be present in the quantified area 103. The user may provide an input to indicate that toothpaste may be present in the quantified area 103. The recommendation engine 151 may notify the user if the item is no longer present in the quantified area 103, has expired or will expire in the future. Optionally, the recommendation engine 151 may take steps to proactively purchase the item from an online store. The expiration management functionality of the inventory analytics server 109 is described in more detail below with reference to the item status manager engine 157.

In at least one embodiment, the recommendation engine 151 may analyze sensor data to identify if an item has been exposed to physical attributes that affect the item. The recommendation engine 151 may take steps to notify the user about the status of the item. The recommendation engine 151 may also take steps to update the expiration date for the item to an earlier date based on the exposure to the physical attributes. The recommendation engine 151 may also work with the coupon manager engine 161 to identify and provide a coupon to the user to replace the item. This functionality will be described in more detail below.

In at least one embodiment, the recommendation engine 151 may identify if an item is leaving a zone of the quantified area where it is supposed to be constrained and notify the user about the status of the item (or notify a security system included in the quantified area about a possible burglary). For example, if the item is jewelry and it leaves the zone of the quantified area 103 where it is supposed to be constrained, then the recommendation engine 151 may take steps to notify the user, the security system or the local police.

In at least one embodiment, the recommendation engine 151 may identify if an item is entering a zone of the quantified area 103 where it is not supposed to be located and then take steps to notify the user about the status of the item. For example, if the item is a gun that enters a child's bedroom, then the recommendation engine 151 may take steps to notify the user about the status of the item.

In at least one embodiment, the recommendation engine 151 may identify one or more coupons for the user. The coupon may include a coupon for a brick and mortar store or an online store. The coupon may include an electronic coupon that may be electronically communicated to the mobile client device 188 or a tangible coupon that is mailed to the mailing address of the quantified area 103 (or some other mailing address associated with the user). The recommendation engine 151 may identify the coupon responsive to determining that the user is running low on inventory for a particular item or that an item has expired or will expire in the future. The coupon may be for a cheaper price on a product that matches the particular item that is included in the inventory of the user or an equivalent item. The recommendation engine 151 may monitor the rate at which the user uses different products and provide the coupons to the user in advance of the user running low on inventory. In at least one embodiment, the coupons may be selected based in part on item-to-item collaborative filtering techniques. In at least one embodiment, some or all of the recommendations made by the recommendation engine 151 (e.g., about items, services, etc.) may be based on collaborative filtering using information from one or more global users using the inventory management system.

In at least one embodiment, the coupons may be communicated to the user so that the user is likely to leave the quantified area 103 during periods of high electricity prices or energy shortages. The coupon service functionality of the inventory analytics server 109 is described in more detail below with reference to the coupon manager engine 161.

The search engine 153 may include code and routines configured to provide a search engine service. For example, the search engine 153 may enable the user of the mobile client device 188 to search for information included in the inventory management system (e.g., data stored in one or more of the data repository 163, the storage 127 or the storage 141) or determined based on an analysis of data stored in the inventory management system. Assume, for example, that the user of the mobile client device 188 wants to locate an item in the quantified area 103. The mobile application 190 may include a GUI including functionality configured to enable the user to provide a search query to the mobile application 190. The search query may include one or more keywords configured to return a search result that specifies the location of the item (e.g., the search query may include "where is the item?" or some similar or equivalent query). The mobile application may receive the search query and transmit the search query to the network 105. The network 105 may transmit the search query to the inventory analytics server 109. The search engine 153 may query the data repository to identify history data that describes the location of the item in the quantified area 103. The search engine 153 may cause the mobile application 190 to display a search result to the user that describes the location of the item in the quantified area 103.

Other search queries are possible. For example, the user may provide a search query configured to provide one or more of the following search results: whether an item is still available in the quantified area 103; the zones in the area which a particular item has visited; the temperatures or other physical attributes which an item has been exposed to; potential alternative products that may be cheaper or greener; and the last person who likely interacted with an item (e.g., one of the sensors of the sensor set 121 is a video camera and the mobile application 190 or the inventory analytics server 109 may include image recognition technology configured to identity a user that interacted with the item) . The preceding list is provided by way of example and not intended to be limiting.

The social engine 155 may include code and routines configured to provide the social network features to the inventory management system. The social engine 155 may enable the user to connect or integrate one or more social networks services provided by the social network application 111 with the functionality provided by the inventory management system. For example, the user of the mobile client device 188 may access the mobile application 190 and provide inputs authorizing the social network application 111 to share social graph data with the inventory analytics server 109 or the mobile client device 188. The social engine 155 may include one or more application programming interfaces to enable the inventory analytics server 109 or the mobile client device 188 to exchange data and information with the social network application 111.

In at least one embodiment, one or more of the mobile application 190, the social engine 155 and the recommendation engine 151 may cooperate and communicate with one another to provide to provide social network functionality to the user. For example, one or more users of the inventory management system may live within a predefine area of one another (e.g., five miles or any other range). The one or more users may be connected with one another via the social network service provided by the social network application 111. The one or more users may modify the privacy settings of the inventory management system so that other users may view the items in the respective quantified areas 103 of the one or more users. The one or more users may use this functionality to borrow items from one another or sell items to one another. For example, the mobile application 190 may display a GUI displaying items that are available for borrowing or purchasing and the user may select an item and take steps within the mobile application 190 to borrow or purchase the selected item. The social engine 155 may include code and routines configured to retrieve any data from the social network application 111 that is used to enable the mobile application 190 to generate the GUI and facilitate the user borrowing or purchasing the selected item. In at least one embodiment, the recommendation engine 151 may include code and routines configured to filter items presented for borrowing or purchasing so that only users who may be interested in an item receive the offer to borrow or purchase the item. The interest level of the user may be based the recommendation engine 151 analyzing the user's preferences and what items the user already owns. In this way, one or more of the mobile application 190, the social engine 155 and the recommendation engine 151 may cooperate and communicate with one another to provide social network functionality to the user.

In at least one embodiment, users may also advertise their availability to assist other users via the social network functionality. For example, a user may advertise that the user is available to assist other users in moving furniture. Users may contact one another via a GUI of the mobile application 190 so that the users may borrow items, sell items or provide services to one another. Borrowing items or providing services as described above may be fee based or provided free of charge.

In at least one embodiment, a user of the mobile client device 188 may use the mobile application 190 to transmit a request for an item which the user needs to borrow. For example, the user may desire to borrow a cart instead of buying one. The mobile application 190 may include code and routines configured to route the request a neighbor who has the item in question. The user and the neighbor may be connected to one another via the social network service provided by the social network application 111. The user may be referred to as a requestor since the user is requesting an item from the neighbor/other users in this and/or other examples. The neighbor may respond to the requestor. The neighbor may indicate that the requestor may borrow the item. In at least one embodiment, the identity of the neighbor is not revealed to the requestor unless the neighbor agrees to allow the requestor to borrow the item. If the neighbor provides an input indicating that the neighbor declines to allow the requestor to borrow the item, the mobile application 190 may identify another social network connection that also has the item which is being requested in the inventory of the other social network connection. If the mobile application 190 is unable to identify a social connection that is willing to let the requestor borrow the item, then the coupon manager engine 161 may identify a coupon for purchasing the item (or a similar product) from a vendor. The coupon manager engine 161 may take steps to cause the coupon to be transmitted to the mobile client device 188 or the quantified area 103.

In at least one embodiment, the administrator of the inventory analytics server 109 may receive a percentage of the sell price for an item or service that is sold, borrowed or provided.

The item status manager engine 157 may include code and routines configured to provide an expiration date management service. For example, the item status manager engine 157 may aggregate one or more expiration dates for items included in the item set 199 and provide notifications to the user of the mobile client device 188 so that the user is aware of product expirations in advance of respective expiration dates and may take actions to replace items that will have expired or may expire in the future. For example, the product registration process may include one or more of the following: the user inputting the product expiration date for each registered item; the user taking a picture of the item using the mobile client device 188 so that the picture includes text describing the product expiration date and the item status manager engine 157 analyzing the picture to identify and record the product expiration date; the user scanning a bar code or QR code of the item and the item status manager engine 157 determining the product expiration date based on information included in the bar code or QR code; and the expiration manager inferring the expiration date based on other data.

The item status manager engine 157 may store the expiration dates for the items included in the item set 199 in the data repository 163. The item status manager engine 157 may track the expiration dates and check them against a current date. The item status manager engine 157 may identify an item from the item set 199 that may expire in the future or has presently expired. The item status manager engine 157 may check the data repository 163 for data to ensure that the item is still present in the quantified area 103. The item status manager engine 157 may notify the user of the mobile client device 188 that the item has expired or will expire in the future.

In at least one embodiment, the item status manager engine 157 initiate an search to identify a store that sells a product that is the same or similar to the item which is expired (or will expire in the future) and provides a notification to the user that provides the user with information that may be used to purchase the identified product.

In at least one embodiment, the item status manager engine 157 may update the expiration date for an item responsive to the recommendation engine 151 determining that the item was exposed to physical attributes that affect the quality of the item.

In at least one embodiment, the item status manager engine 157 may also take steps to automatically purchase a replacement for the item, retrieve a coupon for replacing the item, or notify the user about the need to purchase the replacement or coupons for replacing the item. In this way, the item status manager engine 157 may ensure that items are replaced or replenished in a timely fashion before the items expire or when the items expire.

The location manager engine 159 may include code and routines configured to provide an item location management service. For example, the location manager engine 159 may keep track of the location of one or more items included in the item set 199. The location manager engine 159 may detect when an item moves to the garbage zone 183, to the vehicle zone 185 or outside the quantified area 103. The location manager engine 159 may communicate with the search engine 153 and use the item data 281 for the item to initiate a search for a product that matches the item data 281 or a product that is equivalent to the item data 281. The location manager engine 159 may also take steps to automatically purchase the identified product, retrieve a coupon for the identified product, or notify the user about the identified product or coupons for the identified product. In this way, the location manager engine 159 may ensure that items are replaced or replenished in a timely fashion.

The coupon manager engine 161 may include code and routines configured to provide a coupon service. For example, the coupon manager engine 161 may interact with the coupon server 140 to identify and acquire coupons for products that the user may want to purchase. The coupon manager engine 161 may interact with one or more of the other elements of the operating environment 100 to provide the coupon service. In at least one embodiment, the coupon manager engine 161 may interact with one or more elements of the operating environment to provide the user with one or more targeted advertisements based on the items included in the item set 199 or the user's historical use of items included in the item set 199.

Referring now to Figure 2, a block diagram of an example of the mobile client device 188 is described. The mobile client device 188 may include one or more of the following elements: the mobile application 190; a camera 221; a processor 225; a communication unit 245; the browser 137; the reader module 139; and a memory 227. The components of the mobile client device 188 may be communicatively coupled by a bus 220.

The browser 137 and the reader module 139 were described above with reference to Figure 1, and so, these descriptions will not be repeated here. The browser 137 may be communicatively coupled to the bus 220 via a signal line 242. The reader module 139 may be communicatively coupled to the bus 220 via a signal line 240.

The camera 221 includes a hardware camera device configured to capture images. For example, the camera 221 may capture an image of a QR code for an item. The reader module 139 may then analyze the image to detect and read the QR code as described above.

The processor 225 may include an arithmetic logic unit, a microprocessor, a general-purpose controller, or some other processor array to perform computations and provide electronic display signals to a display device. The processor 225 may be communicatively coupled to the bus 220 for communication with the other components via a signal line 248. The processor 225 may process data signals and may include various computing architectures including a complex instruction set computer (CISC) architecture, a reduced instruction set computer (RISC) architecture, or an architecture implementing a combination of instruction sets. Although Figure 2 includes a single processor 225, multiple processors 225 may be included. Other processors, operating systems, sensors, displays, and physical configurations may be possible.

The communication unit 245 transmits and receives data to and from at least one of the elements of the operating environment 100 described above with reference to Figure 1. The communication unit 245 may be communicatively coupled to the bus 220 via a signal line 246. In at least one embodiment, the communication unit 245 includes a port for direct physical connection to the network 105 or to another communication channel. For example, the communication unit 245 includes a USB, SD, CAT-5, or similar port for wired communication with other entities in the operating environment 100. In at least one embodiment, the communication unit 245 includes a wireless transceiver for exchanging data with other entities in the operating environment 100 or other communication channels using one or more wireless communication methods, including IEEE 802.11, IEEE 802.16, Bluetooth®, or another suitable wireless communication method.

In at least one embodiment, the communication unit 245 includes a cellular communications transceiver for sending and receiving data over a cellular communications network including via short messaging service (SMS), multimedia messaging service (MMS), hypertext transfer protocol (HTTP), direct data connection, WAP, e-mail, or another suitable type of electronic communication. In at least one embodiment, the communication unit 245 includes a wired port and a wireless transceiver. The communication unit 245 may also provide other conventional connections to the network 105 for distribution of files or media objects using standard network protocols including TCP/IP, HTTP, HTTPS, and SMTP, etc.

The memory 227 may include a tangible computer-readable storage medium. The memory 227 may store instructions or data that may be executed by the processor 225. The memory 227 may be communicatively coupled to the bus 220 for communication with the other components via a signal line 244. The instructions or data may include code for performing the techniques described herein. The memory 227 may include a DRAM device, a SRAM device, flash memory, or some other memory device. In at least one embodiment, the memory 227 also includes a non-volatile memory or similar permanent storage device and media including a hard disk drive, a floppy disk drive, a CD-ROM device, a DVD-ROM device, a DVD-RAM device, a DVD-RW device, a flash memory device, or some other mass storage device for storing information on a more permanent basis.

The memory 227 may store code and routines that may include executed by the processor 225. For example, the memory 227 may store one or more modules 202, 129, 131, 133, 139 or the browser 137 which may be executed by the processor 225.

The memory 227 may store one or more of the following elements: image data 279; item data 281; reader data 283; inventory data 285; description data 287; history data 289; sensor data 291; and profile data 293. The memory 227 may also store other data for providing the functionality described herein.

The image data 279 may include data describing one or more images captured by the camera 221. For example, the image data 279 may include images of one or more items. The images may include data associated with the item. For example, the one or more images may include one or more of the following: a QR code; a bar code; and an expiration date. In at least one embodiment, the image data 279 may include multiple images of an item. For example, a robotic device may travel around the item and take pictures from different angles. This may help in identifying an item.

The item data 281 may include data identifying the one or more items. The item data 281 may include a data structure such as a table or a database. The data structure may include data for identifying items based off a QR code or a bar code. The reader data 283 may include identifying information associated with the item. The combination of the item data 281 and the reader data 281 for an item may be used to determine the identity of the item. For example, the camera 221 may capture image data 279. The image data 279 may describe an image including a QR code or a bar code. The reader module 139 may analyze the image data to determine the reader data 283 included in the QR code or the bar code. The reader module 139 may determine the reader data 283 from the QR code or the bar code. The reader module 139 may cross reference the reader data 283 against the data structure described by the item data 281 to determine the identity of the item based off the reader data 283 included in the QR code or bar code. Optionally, the reader module 139 may use the reader data 283 to query the data structure described by the item data 281 to determine the identity of the item.

In at least one embodiment, the item data 281 is stored on a server such as the inventory analytics server 109 and the reader module 139 interacts with the server to determine the identity of the item based on one or more of the image data 279, the reader data 283 and the item data 281.

The inventory data 285 may include data describing the identity of one or more items. For example, the inventory data 285 may include data describing the identity of one or more items included in the item set 199 described above with reference to Figure 1. The inventory data 285 may be determined based on item data 281. The inventory data 285 may include data identifying the items included in the item set 199.

The description data 287 may include data describing the items identified by the inventory data 285. For example, for a given item the description data 287 may describe the expiration date for the item, whether the item may generally be present in the quantified area 103, any limitations on the physical attributes which the item may exposed to when present in the quantified area 103, and any limitations on where the item may be located within the quantified area 103 (e.g., the item may be constrained to one or more zones or the item may not be present in a particular zone). The description data 287 may also describe what actions may be taken if an item leaves a zone where it is constrained or enters a zone where it may not be present.

In at least one embodiment, the description data 287 may be included in the inventory data 285. In at least one embodiment, the inventory data 285 and the description data 287 may be stored as separate but associated columns in a table or data set. For example, the inventory data 285 may identify one or more items and the description data 287 may describe these items.

The history data 289 may describe the history of one or more of the items included in the item set 199. For example, the history data 289 may describe the zones of the area where the item has been present and the day and times when the item was present in those locations. The history data 289 may describe the history of one or more of the items identified by the inventory data 285 and described by the description data 287.

The sensor data 291 may describe one or more physical attributes associated with an item. For example, the sensor data 291 may describe one or more physical attributes detected by the one or more sensors included in the sensor set 121 described above with reference to Figure 1. The sensor data 291 may describe the physical attributes that one or more items were exposed to when present in the quantified area 103. The one or more items may include the items identified by the inventory data 285 and described by the description data 287.

The profile data 293 may include a task or profile created by the task/profile manager 133. The profile data 293 may include any number of tasks and profiles. The profile data 293 may include instructions and/or operations that may use any of the image data 279; item data 281; reader data 283; inventory data 285; description data 287; history data 289; sensor data 291 during execution of a profile. For example, a profile may be used to detect an abnormal event based finding an inconsistency with respect to the history data 289 (e.g., a window that has been closed for 10/10 previous days is now open). In such an embodiment, the inconsistency may be flagged and sent to the mobile client device 188 and/or the inventory analytics server 109 for further analysis and review.

The mobile application 190 may include one or more of the following elements: a communication module 202; the interface module 129; the registration engine 131; and the task/profile manager 133. The interface module 129, the registration engine 131 and the task/profile manager 133 were described above with reference to Figure 1, and so, these descriptions will not be repeated here.

The communication module 202 may include code and routines configured to handle communications between the mobile application 190 and other components of the mobile client device 188. The communication module 202 may send and receive data, via the communication unit 245, to and from one or more of the operating environment 100 described above with reference to Figure 1. For example, the communication module 202 transmits, via the communication unit 245, some or all of the data 279, 281, 283, 285, 287, 289, 291 stored on the memory 227 to the inventory analytics server 109 so that the data 279, 281, 283, 285, 287, 289, 291 may be stored in the data repository 163. The user may choose data to be uploaded based on the privacy preference.

In at least one embodiment, one or more modules of the mobile application 190 may be stored in a single server or device. In some other embodiments, one or more modules of the mobile application 190 may be distributed and stored across multiple servers or devices. Further, the separation of various components, modules, and servers in the embodiments described herein may not be understood as requiring such separation in all embodiments. In at least one embodiment, the described components, modules, devices, or servers may generally be integrated together in a single component, module, device, or server.

In at least one embodiment, the modules 202, 129, 131, 133, 139 and the browser 137 may include a set of instructions executable by the processor 225 to provide the functionality described herein. In some other implementations, the modules 202, 129, 131, 133, 139 and the browser 137 may be stored in the memory 227 and may be accessible and executable by the processor 225 of the mobile client device 188. The modules 202, 129, 131, 133, 139 and the browser 137 may be adapted for cooperation and communication with the processor 225 and other components of the mobile client device 188. In at least one embodiment, the modules 202, 129, 131, 133, 139 and the browser 137 may be adapted to function as one or more thin clients that are stored and executed by a processor 225.

Referring now to Figure 3, a flow diagram of an example method 300 to register an item with the inventory management system is described. The blocks of the method 300 may be performed in any order. Although illustrated as discrete blocks, various blocks may be divided into additional blocks, combined into fewer blocks, or eliminated, depending on the desired implementation. The method 300 will be described below with reference to Figures 1 and 2.

At block 301, the user may couple a tag to an item. For example, the user may affix the tag to the item. In at least one embodiment, the item may be manufactured to include the tag and block 301 may be skipped. At block 302, the presence of the tag may be detected. For example, the tag may be detected by the reader module 139 of the mobile client device 188. At block 304, image data 279 may be received. For example, the camera 221 may capture an image of an item to be registered. The image may include a visual depiction of a bar code or QR code which is included on the item. At block 306, reader data 287 may be determined based on a bar code or QR code included in the image data 279 which describes the image. At block 308, the identity of the item may be determined based on the reader data 287. At block 310, the tag may be associated with the item. For example, inventory data 285 may be generated that includes an indication of the item and the tag associated with the item. At block 312, the description data 287 for the item may be received. The user may provide some or all of the description data 287 via one or more inputs to the mobile application 190 of the mobile client device 188. In some embodiments, some or all of the description data 287 may be received based on the identity of the item being determined from the reader data 283. At block 314, data associated with the item may be transmitted to the network 105. The data may include one or more of the following: the image data 279; the item data 281; the reader data 283; the inventory data 285; and the description data 287.

In at least one embodiment, the inventory for the user may be updated to indicate that the item is present in the qualified area 103. When the status of an item included in the inventory is updated (e.g., the item is consumed, moved, or discarded), the inventory data 285 may be changed (e.g. the item is consumed or discarded) or the history data 289 may be changed (e.g., the item is moved to a different zone) to reflect the updated status of the item.

The data stored by the mobile client device 188 may be shared with the inventory analytics server 109 so that the inventory analytics server 109 may provide one or more services to the user. For example, the inventory analytics server 109 may provide one or more of the following services to the user based in part on the data shared with the inventory analytics server 109: a recommendation service, search engine service, expiration date management service, a location management service, and a coupon service.

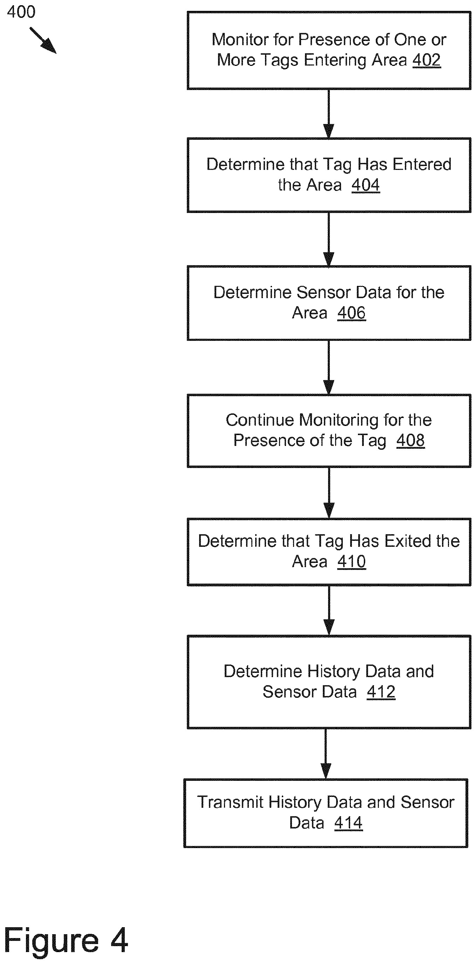

Referring now to Figure 4, a flow diagram of an example method 400 to track an item in the quantified area 103 is described. The blocks of the method 400 may be performed in any order. Although illustrated as discrete blocks, various blocks may be divided into additional blocks, combined into fewer blocks, or eliminated, depending on the desired implementation. The method 400 will be described below with reference to Figures 1 and 2.

Block 402 may include monitoring for the presence of one or more tags entering a zone. For example, the reader device 125 may monitor for the presence of the tag in the home zone 181. At block 404, a determination may be made regarding whether the tag has entered the zone. For example, the reader device 125 may detect the presence of the tag in the home zone 181. At block 406, sensor data 291 for the zone may be determined. For example, the sensor set 121 for the home zone 181 may determine one or more physical attributes of the home zone 181 after the tagged item enters the home zone 181. At block 408, monitoring for the presence of the tag may continue. For example, the reader device 125 may monitor the presence of the tag to determine when or if it exits the home zone 181. At block 410, it may be determined that the tag has exited the zone. For example, the reader device 125 may determine that the tag has exited the home zone 181. At block 412, history data 289 and sensor data 291 may be determined. The history data 289 may describe the time when the tagged item entered the home zone 181 and the time when the item left the home zone 181. The sensor data 291 may describe the physical attributes present in the home zone 181 while the tagged item was present in the home zone 181. At block 414, the history data 289 and the sensor data 281 may be transmitted. For example, the history data 289 and the sensor data 281 may be transmitted to the network 105 or the mobile client device 188.

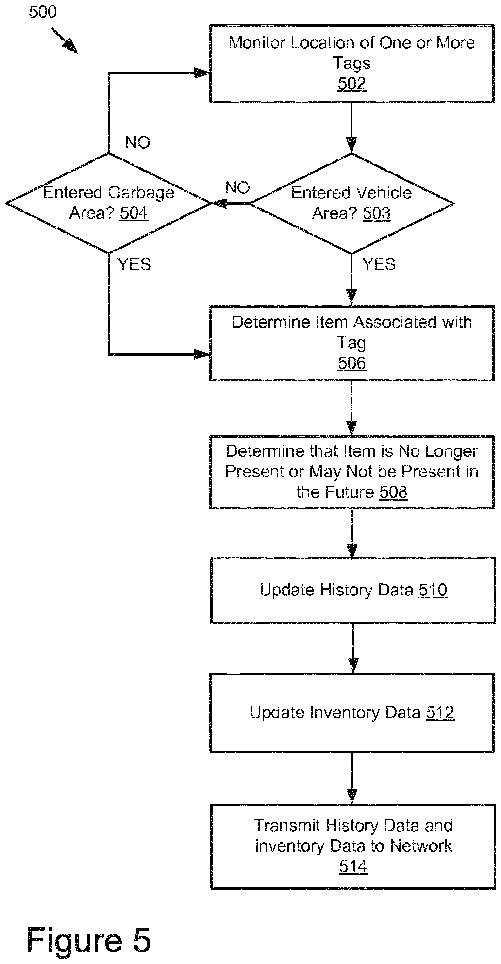

Referring now to Figure 5, a flow diagram of an example method 500 to update the status of an item with the inventory management system is described. The blocks of the method 500 may be performed in any order. Although illustrated as discrete blocks, various blocks may be divided into additional blocks, combined into fewer blocks, or eliminated, depending on the desired implementation. The method 500 will be described below with reference to Figures 1 and 2.

Block 502 may include monitoring the location of one or more tags. For example, the mobile application 190 may monitor for history data 289 indicating the presence of the tag within the quantified area 103. At block 503, a determination may be made regarding whether a tag has entered the vehicle zone 185. If the tag has not entered the vehicle zone 185, the method 500 may proceed to block 504. If the tag has entered the vehicle zone 185, then the method 500 may proceed to block 506. Block 506 will be described in the subsequent paragraph. At block 504, a determination may be made regarding whether the tag has entered the garbage zone 183. If the tag has not entered the garbage zone 183, then the method 500 may proceed to block 502. If the tag has entered the garbage zone 183, then the method 500 may proceed to block 506.

At block 506, the item associated with the tag may be determined. A block 508, a determination may be made that the tag is no longer present in the quantified area 103 or will not be present in the quantified area 103 in the future. At block 510, the history data 289 for the item may be updated. At block 512, the inventory data may 285 for the item be updated. At block 514, the history data 289 and the inventory data 285 may be transmitted to the network 105.

Referring now to Figure 6, a flow diagram of an example method 600 to create a profile for execution by a reader device within an inventory management system is described. The blocks of the method 600 may be performed in any order. Although illustrated as discrete blocks, various blocks may be divided into additional blocks, combined into fewer blocks, or eliminated, depending on the desired implementation. The method 600 may be performed in response to receiving user input to create a profile. The method 600 will be described below with reference to Figures 1 and 2.

Block 605 may include creating a profile name. The profile name may include any name. In at least one embodiment, the profile name is limited to a predetermined number of characters. The profile name may be user-defined or automatically generated. Example profile names may include: "Going to work," "Going on vacation," "Guests expected," "In-laws expected," "Going out to dinner with kids," "Donation pickup," etc.

Block 610 may include selecting a location (e.g., a quantified area 103, one or more zones within the quantified area 103). For example, a user may specify a room in a house where the profile is to be executed.

Block 615 may include selecting an item for inclusion in the profile. The item may include any item. The item may be selected from a database of existing items. Alternatively, the item and details about the item may be entered manually by a user. Selecting the item may also include marking a record of the item as "present" or "absent" which indicates whether the reader device is to look for the presence or absence of the item.

Block 620 may include suggesting an additional item for inclusion in the profile. The additional item may be similar to an item that was previously selected (e.g., a similar type of item, a complementary item, an item that is typically located near the previously selected item).

Block 625 may include determining whether to add more items, which may be determined in response to receiving input from a user to add another item. In at least one embodiment, a prompt may be presented to the user that asks the user if the user would like to add more items along with "Yes" and "No" options. In response to determining to add more items to the profile, the method 600 may proceed to block 615. In response to determining to not add more items to the profile, the method 600 may proceed to block 630.

When no more items are added to the profile, block 630 may include determining whether to add one or more locations to the profile, which may be determined in response to receiving input from a user to add another location. In at least one embodiment, a prompt may be presented to the user that asks the user if the user would like to add another location along with "Yes" and "No" options. In response to determining to add another location to the profile, the method 600 may proceed to block 610. In response to determining to not add another location to the profile, the method 600 may proceed to block 635.

Block 635 may include specifying profile execution parameters. The profile execution parameters may include any actions that may be performed by the reader device 125, as described herein. For example, the profile execution parameters may include a specific time to start execution of the profile, a recurrence schedule, deadlines (e.g., the reader device 125 may compute when to start the profile such that the profile is completed by the deadline), and/or a condition to be met prior to execution of the profile. For example, the condition may include a weather condition or may be based on calendar data.

Block 640 may include saving the profile. The profile may be saved as profile data 293 in the memory 227.

In at least one embodiment, profiles may be cloned and updated using some or all of the blocks described in conjunction with method 600.

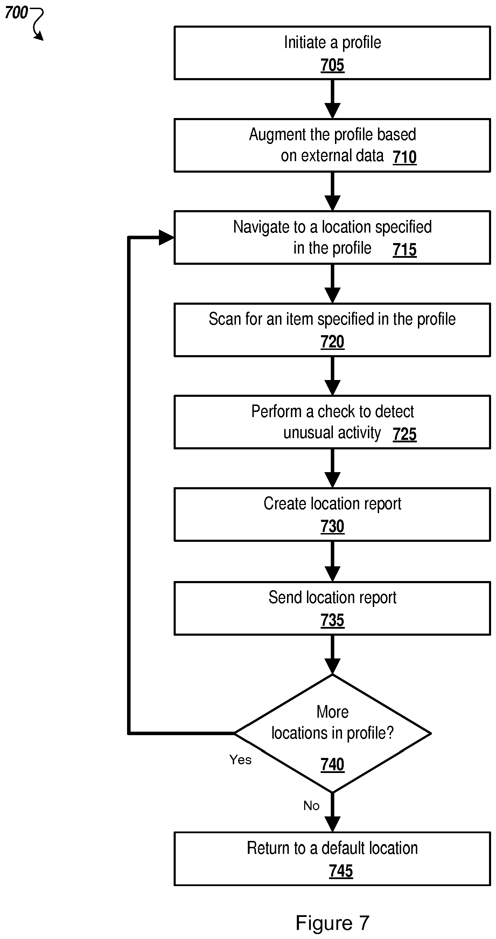

Referring now to Figure 7, a flow diagram of an example method 700 to execute a profile by the reader device 125 within an inventory management system is described. The blocks of the method 700 may be performed in any order. Although illustrated as discrete blocks, various blocks may be divided into additional blocks, combined into fewer blocks, or eliminated, depending on the desired implementation. The method 700 will be described below with reference to Figures 1 and 2.

Block 705 may include initiating a profile. Initiating the profile may include receiving the profile from an external source, such as from the mobile client device 188 or from the inventory analytics server 109. In at least one embodiment, the profile may be initiated according to one or more profile execution parameters, as further described in conjunction with Figure 6.

Block 710 may include augmenting the profile based on external data. Specifically, the reader device 125 may augment the profile with additional tasks/profiles, or select appropriate profiles based on external data. For example, if a weather forecast calls for a storm and the user's "Going to Work" profile is active for 8am in the morning, the reader device 125 may also add a "Rainy Profile" to the "Going to Work" profile. The 'Rainy Profile" may include a check for whether the user's umbrella is by the door/by the user's bag, and also check that all windows are closed (e.g., using a camera and/or by communicating with the house's window sensors). As another example, if the user's calendar indicates that the user has a dentist appointment (in addition to being a workday), the reader device 125 may add the profile "Dentist Appointment" to the "Going to Work" profile, (e.g., the Dentist Appointment profile may include bringing a toothbrush and toothpaste to the list of items to check for by the door/purse of the user.) Each member of a household may have their own profiles for tasks (such as going to work), while some profiles may be shared and edited jointly, (e.g., for having guests). In at least one embodiment, augmenting the profile based on external data may include receiving the augmentation and/or instructions for how to augment the profile from an external source (e.g., the mobile client device 188, inventory analytics server 109). For example, upon determining that today's weather likely includes rain the mobile client device 188 may send the "Rainy Profile" to the reader device 125. The mobile client device 188 may also send instructions to add the "Rainy Profile" to some or all profiles that are to be executed on that same day (or during the rainy periods of the day).

Block 715 may include navigating to a location specified in the profile. For example, the reader device 125 may identify a location (e.g., a zone within the quantified area 103) and may move from its current location to that location in the profile. Block 720 may include scanning for an item specified in the profile, as described herein. Block 725 may include performing checks to detect unusual activity, as described herein.

Block 730 may include creating a location report that includes any sensor readings or information gathered at that location. For example, the reader device 125 may generate the location report to include which items are present at the location, and audio/video/images, whether any further analysis is needed (such analysis may be performed by the reader device 125, the mobile client device 188 and/or the inventory analytics server 109).

Block 735 may include sending the location report to another device, such as to another reader device, the mobile client device 188 and/or the inventory analytics server 109.

Block 740 may include determining whether there are more locations in the profile. In response to determining to add another location to the profile, the method 600 may proceed to block 610. In response to determining there are more locations in the profile, the method 700 may proceed to block 715. In response to determining there are no more locations in the profile, the method 700 may proceed to block 745.

Block 745 may include returning to a default location. For example, the reader device 125 may have a docking station equipped with a battery charger when the reader device 125 goes when not executing a profile. In at least one embodiment, the default location may be defined by a user or by an item. For example, the user may wear a tag that the reader device 125 may actively follow. The reader device 125 may follow an item or the user (e.g., the user may be detected based on an RFID tag attached to the user's clothing/phone, and/or localizing the phone, and/or image processing).

An example task that may be created using method 600 and executed by method 700 may be used for going on a vacation. The profile may include profile execution parameters where the reader device 125 may travel through each room in a house and check, based on RFID, image analysis and sensor data, that: no perishable food items are present, other than in a refrigerator, the trash is empty (e.g., no RFID items are detected in a garbage zone), no valuables or documents are lying around/are visible (valuables may be a category that items are marked with as the items are added to the customer's inventory + items of certain types, e.g., jewelry boxes, that may be detected based on names of the items), all lights are turned off, appliances are turned off (user may specify exceptions such as the dish washer), windows are closed shut, blinds are drawn, etc. The reader device 125 may then verify that user has packed important items for the vacation. For example, the user may enter a packing list and the reader device 125 may verify that the items on the packing list, and related items (e.g., luggage) are packed. For example, the reader device 125 may determine whether items from the user's packing list that are present in the system's inventory are all near/in the user's bags/suitcases, (e.g., neck pillow, kindle, glasses, umbrella, charger for mobile device). In a specific example, the reader device 125 may check that a neck pillow and mobile device are in a hand luggage. Based on flight information from the user's calendar, if the trip is international, the reader device 125 may also check for passport and Global Entry card. Based on the destination, the reader device 125 may check if the user has packed the correct electricity adaptor(s). Based on activities during the trip listed on the user's calendar, the reader device 125 may check if the user has wetsuit, goggles, golf shoes, etc. Similarly, the processing device may use activities of the user in previous trips, (e.g., if the user went hiking the last time they were in Hawaii or a similar destination), then the user may end up doing that again. The reader device 125 may also recommend activities based on what the reader device 125 determines the user may be interested in (based on prior history). Based on weather information for the destinations of the trip, the reader device 125 may recommend additional items for the user to pack, (e.g., umbrella). The user may activate the profile a few minutes before the user leaves the house, or at various stages of packing in order to estimate the user's level of ready-ness. Each member of the family may contribute their own profile (or tasks to a shared family profile), a packing list, and a travel schedule.

The embodiments described herein may include the use of a special-purpose or general-purpose computer including various computer hardware or software modules, as discussed in greater detail below. For example, one or more elements of the operating environment 100 may include or be combined to form a special-purpose computer programmed to executed one or more blocks of the methods 300, 400, 500, 600, 700 described above with reference to Figures 3, 4, 5, 6 and 7.

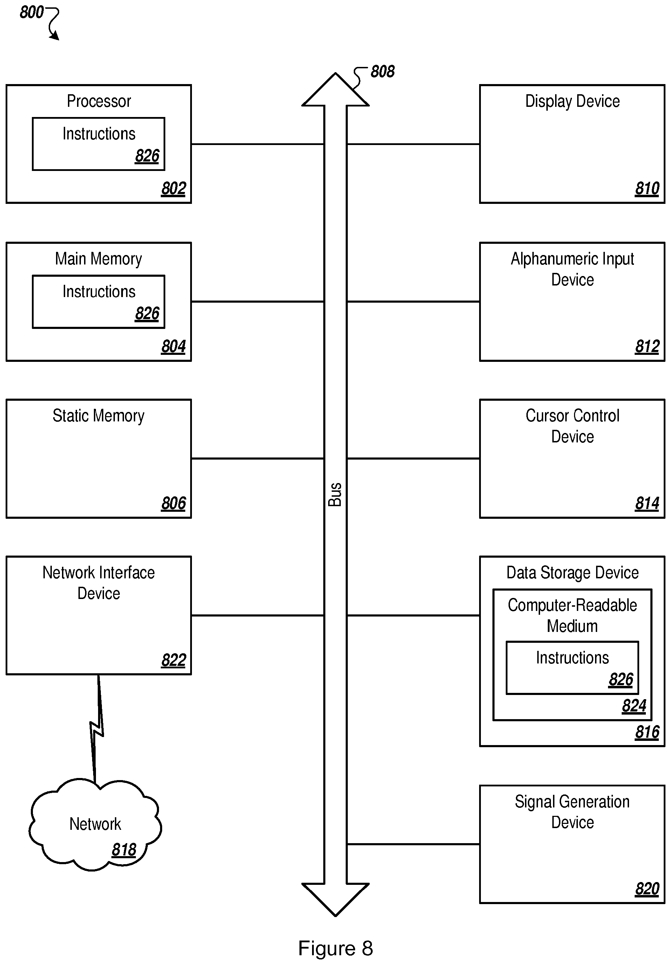

Figure 8 illustrates a diagrammatic representation of a machine in the example form of a computing device 800 within which a set of instructions, for causing the machine to perform any one or more of the methods discussed herein, may be executed. The computing device 800 may include a mobile phone, a smart phone, a netbook computer, a rackmount server, a router computer, a server computer, a personal computer, a mainframe computer, a laptop computer, a tablet computer, a desktop computer etc., within which a set of instructions, for causing the machine to perform any one or more of the methods discussed herein, may be executed. In alternative embodiments, the machine may be connected (e.g., networked) to other machines in a LAN, an intranet, an extranet, or the Internet. The machine may operate in the capacity of a server machine in client-server network environment. The machine may include a personal computer (PC), a set-top box (STB), a server, a network router, switch or bridge, or any machine capable of executing a set of instructions (sequential or otherwise) that specify actions to be taken by that machine. Further, while only a single machine is illustrated, the term "machine" may also include any collection of machines that individually or jointly execute a set (or multiple sets) of instructions to perform any one or more of the methods discussed herein.

The example computing device 800 includes a processing device (e.g., a processor) 802, a main memory 804 (e.g., read-only memory (ROM), flash memory, dynamic random access memory (DRAM) such as synchronous DRAM (SDRAM)), a static memory 806 (e.g., flash memory, static random access memory (SRAM)) and a data storage device 816, which communicate with each other via a bus 808.

Processing device 802 represents one or more general-purpose processing devices such as a microprocessor, central processing unit, or the like. More particularly, the processing device 802 may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processing device 802 may also include one or more special-purpose processing devices such as an application specific integrated circuit (ASIC), a field programmable gate array (FPGA), a digital signal processor (DSP), network processor, or the like. The processing device 802 is configured to execute instructions 826 for performing the operations and steps discussed herein.

The computing device 800 may further include a network interface device 822 which may communicate with a network 818. The computing device 800 also may include a display device 810 (e.g., a liquid crystal display (LCD) or a cathode ray tube (CRT)), an alphanumeric input device 812 (e.g., a keyboard), a cursor control device 814 (e.g., a mouse) and a signal generation device 820 (e.g., a speaker). In one implementation, the display device 810, the alphanumeric input device 812, and the cursor control device 814 may be combined into a single component or device (e.g., an LCD touch screen).

The data storage device 816 may include a computer-readable storage medium 824 on which is stored one or more sets of instructions 826 embodying any one or more of the methods or functions described herein. The instructions 826 may also reside, completely or at least partially, within the main memory 804 and/or within the processing device 802 during execution thereof by the computing device 800, the main memory 804 and the processing device 802 also constituting computer-readable media. The instructions may further be transmitted or received over a network 818 via the network interface device 822.

While the computer-readable storage medium 826 is shown in an example embodiment to be a single medium, the term "computer-readable storage medium" may include a single medium or multiple media (e.g., a centralized or distributed database and/or associated caches and servers) that store the one or more sets of instructions. The term "computer-readable storage medium" may also include any medium that is capable of storing, encoding or carrying a set of instructions for execution by the machine and that cause the machine to perform any one or more of the methods of the present disclosure. The term "computer-readable storage medium" may accordingly be taken to include, but not be limited to, solid-state memories, optical media and magnetic media, as further exemplified below for computer-readable media.

Terms used herein and especially in the appended claims (e.g., bodies of the appended claims) are generally intended as "open" terms *(e.g.,* the term "including" may be interpreted as "including, but not limited to," the term "having" may be interpreted as "having at least," the term "includes" may be interpreted as "includes, but is not limited to," etc.).

Additionally, if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases may not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (*e.g*., "a" and/or "an" may be interpreted to mean "at least one" or "one or more"); the same holds true for the use of definite articles used to introduce claim recitations.

In addition, even if a specific number of an introduced claim recitation is explicitly recited, those skilled in the art will recognize that such recitation may be interpreted to mean at least the recited number (*e.g*., the bare recitation of "two recitations," without other modifiers, means at least two recitations, or two or more recitations). Further, in those instances where a convention analogous to "at least one of A, B, and C, etc." or "one or more of A, B, and C, etc." is used, in general such a construction is intended to include A alone, B alone, C alone, A and B together, A and C together, B and C together, or A, B, and C together, etc. For example, the use of the term "and/or" is intended to be construed in this manner.

Further, any disjunctive word or phrase presenting two or more alternative terms, whether in the description, claims, or drawings, may be understood to contemplate the possibilities of including one of the terms, either of the terms, or both terms. For example, the phrase "A or B" may be understood to include the possibilities of "A" or "B" or "A and B."

Embodiments described herein may be implemented using computer-readable media for carrying or having computer-executable instructions or data structures stored thereon. Such computer-readable media may be any available media that may be accessed by a general purpose or special purpose computer. By way of example, and not limitation, such computer-readable media may include non-transitory computer-readable storage media including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices), or any other storage medium which may be used to carry or store desired program code in the form of computer-executable instructions or data structures and which may be accessed by a general purpose or special purpose computer. Combinations of the above may also be included within the scope of computer-readable media.

Computer-executable instructions may include, for example, instructions and data which cause a general purpose computer, special purpose computer, or special purpose processing device (e.g., one or more processors) to perform a certain function or group of functions. Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

As used herein, the terms "module" or "component" may refer to specific hardware implementations configured to perform the operations of the module or component and/or software objects or software routines that may be stored on and/or executed by general purpose hardware (e.g., computer-readable media, processing devices, etc.) of the computing system. In some embodiments, the different components, modules, engines, and services described herein may be implemented as objects or processes that execute on the computing system (e.g., as separate threads). While some of the system and methods described herein are generally described as being implemented in software (stored on and/or executed by general purpose hardware), specific hardware implementations or a combination of software and specific hardware implementations are also possible and contemplated. In this description, a "computing entity" may be any computing system as previously defined herein, or any module or combination of modulates running on a computing system.

All examples and conditional language recited herein are intended for pedagogical objects to aid the reader in understanding the invention and the concepts contributed by the inventor to furthering the art, and are to be construed as being without limitation to such specifically recited examples and conditions. Although embodiments of the present disclosure have been described in detail, it may be understood that the various changes, substitutions, and alterations may be made hereto without departing from the spirit and scope of the present disclosure.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

## Claims

1. A method comprising:
receiving a profile that includes a set of tasks;
navigating, by a reader device, a quantified area according to the profile to locate one or more items in the quantified area;
locating a first item in the quantified area;
creating a location report that identifies the first item in the quantified area, wherein the location report is to be used to generate an inventory of items in the quantified area; and
sending the location report to one of a server or a mobile client device.

2. The method of claim 1, wherein the quantified area comprises a first zone, wherein the profile indicates that the first item is located in the first zone, wherein locating the first item in the quantified area comprises locating the first item in the first zone,
wherein the method optionally further comprises:
identifying a second zone in the quantified area defined in the profile;
navigating to the second zone in the quantified area according to the profile; and
locating a second item in the second zone, wherein the location report indicates that the first item is in the first zone and that the second item is in the second zone.

3. The method of any of the preceding claims, wherein locating the first item in the quantified area comprises receiving sensor data from a tag affixed to the first item.

4. The method of any of the preceding claims further comprising:
performing, according to the profile, a check to detect unusual activity in the quantified area; and/or
augmenting the profile based on information received from an external device, wherein augmenting the profile comprises modifying or adding to the profile; and/or
enabling a financial transaction related to a sale of the first item or a service associated with the first item.

5. The method of any of the preceding claims, wherein the quantified area comprises a plurality of zones, the method further comprising returning, by the reader device, to a default location in response to a determination that the reader device has navigated to all zones defined in the profile.

6. Programming code executable by a processor to perform or control performance of operations comprising:
receiving a profile that includes a set of tasks;
navigating, by a reader device, a quantified area according to the profile to locate one or more items in the quantified area;
locating a first item in the quantified area;
creating a location report that identifies the first item in the quantified area, wherein the location report is to be used to generate an inventory of items in the quantified area; and
sending the location report to one of a server or a mobile client device.

7. The programming code of claim 6, wherein the quantified area comprises a first zone, wherein the profile indicates that the first item is located in the first zone, wherein locating the first item in the quantified area comprises locating the first item in the first zone,
wherein the operations optionally further comprise:
identifying a second zone in the quantified area defined in the profile;
navigating to the second zone in the quantified area according to the profile; and
locating a second item in the second zone, wherein the location report indicates that the first item is in the first zone and that the second item is in the second zone.

8. The programming code of claim 6 or 7, wherein locating the first item in the quantified area comprises receiving sensor data from a tag affixed to the first item.

9. The programming code of any of claims 6 to 8, the operations further comprising:
performing, according to the profile, a check to detect unusual activity in the quantified area; and/or
augmenting the profile based on information received from an external device, wherein augmenting the profile comprises modifying or adding to the profile; and/or
receiving, from a second reader device, information pertaining to performance of the profile.

10. The programming code of any of claims 6 to 9, wherein the quantified area comprises a plurality of zones, the operations further comprising returning, by the reader device, to a default location in response to a determination that the reader device has navigated to all zones defined in the profile.

11. A computer readable medium having the programming code of any of claims 6 to 10 encoded therein.

12. A mobile automation unit comprising:
a memory; and
a processing unit operatively coupled to the memory to maintain an inventory of items in a quantified area, as the mobile automation unit navigates in the quantified area to identify the items based on identification of tags associated with the items,
wherein the inventory is maintained based on a predetermined profile.

13. The mobile automation unit of claim 12, wherein the inventory is maintained by the mobile automation unit by finding, creating, and/or verifying items in the quantified area.

14. The mobile automation unit of claim 12 or 13, wherein the predetermined profile includes a set of tasks that are to be performed by the mobile automation unit to maintain the inventory of items in the quantified area.

15. The mobile automation unit of any of claims 12 to 14, wherein the processing unit is operable to:
create a location report that identifies a first item in the quantified area; and
send the location report to one of a server or a mobile client device.
